# EUROPEAN PATENT APPLICATION

(11) **EP 2 857 367 A1**
(43) Date of publication of application: **08.04.2015**
(21) Application number: 13799861.3
(22) Date of filing: 04.06.2013
(51) Int. Cl.: C03C 3/112, C03C 3/118

(54) **ALKALI-FREE GLASS AND METHOD FOR PRODUCING SAME**

(30) Priority: 05.06.2012 JP 2012128204
(71) Applicant: Asahi Glass Company, Limited, Tokyo 100-8405 (JP)
(72) Inventor: TOKUNAGA Hirofumi, Tokyo 100-8405 (JP); KOIKE Akio, Tokyo 100-8405 (JP); NISHIZAWA Manabu, Tokyo 100-8405 (JP); TSUJIMURA Tomoyuki, Tokyo 100-8405 (JP)
(74) Representative: Müller-Boré & Partner Patentanwälte PartG mbB
(86) International application number: PCT/JP2013/065449
(87) International publication number: WO 2013/183625

(57) **Abstract**

The present invention relates to an alkali-free glass having a strain point of 710°C or higher, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,320°C or lower, containing, indicated by % by mass on the basis of oxides: SiO₂ 58.5 to 67.5, Al₂O₃ 18 to 24, B₂O₃ 0 to 1.7, MgO 6.0 to 8.5, CaO 3.0 to 8.5, SrO 0.5 to 7.5, BaO 0 to 2.5, and ZrO₂ 0 to 4.0, containing 0 to 0.35% by mass of Cl, 0.01 to 0.15% by mass of F, and 0.01 to 0.3% by mass of SnO₂, and having a β-OH value of the glass of from 0.15 to 0.60 mm⁻¹, in which (MgO/40.3)+(CaO/56.1)+(SrO/103.6)+(BaO/153.3) is from 0.27 to 0.35, (MgO/40.3)/((MgO/40.3)+(CaO/56.1)+(SrO/103.6)+(BaO/153.3)) is 0.40 or more, (MgO/40.3)/((MgO/40.3)+(CaO/56.1)) is 0.40 or more, and (MgO/40.3)/((MgO/40.3)+(SrO/103.6)) is 0.60 or more.

## Description

### TECHNICAL FIELD

The present invention relates to an alkali-free glass that is suitable as a substrate glass for various displays and a substrate glass for a photomask, does not substantially contain an alkali metal oxide and is capable of being formed by a float process, and to a method for producing the same.

### BACKGROUND ART

Heretofore, a substrate glass for various displays, particularly ones on which surfaces a metal or oxide thin film or the like is formed, has been required to have the following characteristics:
(1) Not substantially containing alkali metal ions; because in the case where an alkali metal oxide is contained, alkali metal ions diffuse in the thin film, resulting in deterioration of film characteristics.
(2) Having a high strain point so that deformation of a glass and shrinkage (thermal shrinkage) due to structure stabilization of the glass can be minimized when exposed to high temperature in a thin film formation step.
(3) Having sufficient chemical durability to various chemicals used in semiconductor formation; in particular, having durability to buffered hydrofluoric acid (BHF: mixed liquid of hydrofluoric acid and ammonium fluoride) for etching SiOₓ or SiNₓ, a chemical solution containing hydrochloric acid used for etching of ITO, various acids (nitric acid, sulfuric acid, etc.) used for etching of an metal electrode, and an alkaline of a resist removing liquid.
(4) Having no defects (bubbles, striae, inclusions, pits, flaws, etc.) in the inside and on the surface.

In addition to the above requirements, the recent situations are as follows.
(5) Reduction in weight of a display is required, and the glass itself is also required to be a glass having a small density.
(6) Reduction in weight of a display is required, and a decrease in thickness of the substrate glass is desired.
(7) In addition to conventional amorphous silicon (a-Si) type liquid crystal displays, polycrystal silicon (p-Si) type liquid crystal displays requiring a slightly high heat treatment temperature have come to be produced (a-Si: about 350°C → p-Si: 350 to 550°C).
(8) In order to improve productivity and increase thermal shock resistance by increasing the rate of rising and falling temperature in heat treatment for preparation of a liquid crystal display, a glass having a small average thermal expansion coefficient is required.

On the other hand, dry etching has prevailed, and requirement of BHF resistance has come to be weakened. As conventional glasses, many glasses containing B₂O₃ in an amount of from 6 to 10 mol% have been used in order to improve BHF resistance. However, B₂O₃ has a tendency to decrease the strain point. As examples of alkali-free glasses containing no or only small amount of B₂O₃, there are the following ones:
Patent Document 1 discloses a SiO₂-Al₂O₃-SrO glass containing no B₂O₃. However, the temperature required for melting is high, which causes a difficulty in production.
Patent Document 2 discloses a SiO₂-Al₂O₃-SrO crystallized glass containing no B₂O₃. However, the temperature required for melting is high, which causes a difficulty in production.
Patent Document 3 discloses a glass containing B₂O₃ in an amount of from 0 to 3% by weight. However, the strain point in Examples thereof is 690°C or lower.
Patent Document 4 discloses a glass containing B₂O₃ in an amount of from 0 to 5 mol%. However, the average thermal expansion coefficient thereof at from 50 to 350°C exceeds 50×10⁻⁷/°C.
Patent Document 5 discloses a glass containing B₂O₃ in an amount of from 0 to 5 mol%. However, the thermal expansion is large, and the density thereof is also high.

In order to solve the problems in the glasses described in Patent Documents 1 to 5, an alkali-free grass described in Patent Document 6 is proposed. The alkali-free grass described in Patent Document 6 is considered to have a high strain point, to be able to be formed by a float process, and to be suitable for use in a substrate for a display, a substrate for a photomask and the like.

### PRIOR ART DOCUMENTS

### PATENT DOCUMENTS

Patent Document 1: JP-A-S62-113735
Patent Document 2: JP-A-S62-100450
Patent Document 3: JP-A-H4-325435
Patent Document 4: JP-A-H5-232458
Patent Document 5: US Patent 5,326,730
Patent Document 6: JP-A-H10-45422
Patent Document 7: JP-A-H10-324526

### SUMMARY OF THE INVENTION

### PROBLEMS THAT THE INVENTION IS TO SOLVE

In a substrate glass for various displays or a substrate glass for a photomask, a demand for the quality of (4) above is strict. In Patent Document 7, at least one of Sb₂O₃, SO₃, Fe₂O₃, and SnO₂, and at least one of F and CI are added as clarifying agents in an effective amount. However, a clarifying effect is not perfect in any of the elements, and a problem in that unmelted materials remain in the glass has not been solved.

However, as a method of producing p-Si TFT with high quality, a solid-phase crystallization method is exemplified. However, in order to perform the method, it is necessary to further increase the strain point.

Meanwhile, from demands for a glass production process, particularly for melting and forming, it is necessary to decrease the viscous properties of the glass, particularly a temperature T₄ at which the glass viscosity becomes 10⁴ dPa·s.

The addition of a clarifying agent is mainly aimed at clarifying effect at the time of melting glass raw materials, but it is also necessary to suppress foam which is newly generated after a clarifying reaction for satisfying the demand for the quality of (4) above.

As another example of a generation source of new foam after the clarifying reaction, interface foam (hereinafter, in the present specification, referred to as "platinum interface foam") generated on the interface between platinum materials used for a channel of a glass melt and the glass melt is exemplified.

An object of the present invention is to provide an alkali-free glass which solves the above-described problems, has a high strain point and a low viscosity, particularly a low temperature T₄ at which the glass viscosity becomes 10⁴ dPa·s, is easily formed by a float process, and is excellent in a clarifying action at the time of producing glass.

### MEANS FOR SOLVING THE PROBLEMS

The present invention provides an alkali-free glass (1) having a strain point of 710°C or higher, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,320°C or lower, containing, indicated by % by mass on the basis of oxides:

| | |
|---|---|
| SiO₂ | 58.5 to 67.5, |
| Al₂O₃ | 18 to 24, |
| B₂O₃ | 0 to 1.7, |
| MgO | 6.0 to 8.5, |
| CaO | 3.0 to 8.5, |
| SrO | 0.5 to 7.5, |
| BaO | 0 to 2.5, and |
| ZrO₂ | 0 to 4.0, |

containing 0 to 0.35% by mass of Cl, 0.01 to 0.15% by mass of F, and 0.01 to 0.3% by mass of SnO₂, and
having a β-OH value of the glass of from 0.15 to 0.60 mm⁻¹,
in which (MgO/40.3)+(CaO/56.1)+(SrO/103.6)+(BaO/153.3) is from 0.27 to 0.35,
(MgO/40.3)/((MgO/40.3)+(CaO/56.1)+(SrO/103.6)+(BaO/153.3)) is 0.40 or more,
(MgO/40.3)/((MgO/40.3)+(CaO/56.1)) is 0.40 or more, and
(MgO/40.3)/((MgO/40.3)+(SrO/103.6)) is 0.60 or more.

The present invention also provides an alkali-free glass (2) having a strain point of 710°C or higher, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,320°C or lower, containing, indicated by % by mass on the basis of oxides:

| | |
|---|---|
| SiO₂ | 58 to 66.5, |
| Al₂O₃ | 18 to 24, |
| B₂O₃ | 0 to 1.7, |
| MgO | 3.0 to less than 6.0, |
| CaO | 3.0 to 10, |
| SrO | 0.5 to 7.5, |
| BaO | 0 to 2.5, and |
| ZrO₂ | 0 to 4.0, |

containing 0 to 0.35% by mass of Cl, 0.01 to 0.15% by mass of F, and 0.01 to 0.3% by mass of SnO₂, and
having a β-OH value of the glass of from 0.15 to 0.60 mm⁻¹,
in which (MgO/40.3)+(CaO/56.1)+(SrO/103.6)+(BaO/153.3) is from 0.27 to 0.35,
(MgO/40.3)/((MgO/40.3)+(CaO/56.1)+(SrO/103.6)+(BaO/153.3)) is 0.40 or more,
(MgO/40.3)/((MgO/40.3)+(CaO/56.1)) is 0.40 or more,
(MgO/40.3)/((MgO/40.3)+(SrO/103.6)) is 0.60 or more, and
(Al₂O₃×100/102)×(MgO/40.3)/((MgO/40.3)+(CaO/56.1)+(SrO/103.6)+(BaO/153.3)) is 8.2 or more.

### ADVANTAGEOUS EFFECTS OF INVENTION

The alkali-free glass of the present invention is suitable particularly for a substrate for a display, a substrate for a photomask, a glass substrate for a magnetic disk or the like for a high strain point use, and further, is an easily float-formable glass.

### MODE FOR CARRYING OUT THE INVENTION

Next, the composition range of each component will be described.

SiO₂ increases the meltability of the glass, decreases the thermal expansion coefficient, and increases the strain point. Here, in a first embodiment of the alkali-free glass of the present invention, the content of SiO₂ is from 58.5% (% by mass, hereinafter the same unless otherwise noted) to 67.5%. In the case of less than 58.5%, the strain point is not sufficiently increased, the thermal expansion coefficient is increased, and the density is increased. It is preferably 59% or more and more preferably 60% or more. In the case of exceeding 67.5%, the meltability is decreased and the devitrification temperature is increased. It is preferably 67% or less, more preferably 66% or less, and particularly preferably 65% or less.

Meanwhile, in a second embodiment of the alkali-free glass of the present invention, the content of SiO₂ is form 58% to 66.5%. In the case of less than 58%, the above-described effects due to SiO₂ are not sufficiently exhibited. It is preferably 59% or more and more preferably 60% or more. In the case of exceeding 66.5%, the meltability is decreased and the devitrification temperature is increased. It is preferably 66% or less, more preferably 65.5% or less, and particularly preferably 65% or less.

Al₂O₃ suppresses phase-separation of the glass, decreases the thermal expansion coefficient, and increases the strain point. However, in the case of less than 18%, the effects are not exhibited, and another component which increases the expansion is required to be increased, as a result, the thermal expansion becomes increased. It is preferably 19.5% or more and more preferably 20% or more. In the case of exceeding 24%, there is a concern that the meltability of the glass is degraded or the devitrification temperature is increased. It is preferably 23% or less, more preferably 22.5% or less, and still more preferably 22% or less.

Since B₂O₃ improves the melting reactivity of the glass and decreases the devitrification temperature, it can be added up to 1.7%. However, too much causes a decrease in the strain point. Therefore, it is preferably 1.5% or less, more preferably 1.3% or less, and particularly preferably 0.9% or less. Considering the environmental load, it is preferably substantially not contained. The expression "not substantially contained" means that materials other than unavoidable impurities are not contained.

MgO has characteristics that it does not increase the expansion among alkaline earths and does not extremely decrease the strain point, and improves the meltability.

Here, in the first embodiment of the alkali-free glass of the present invention, the content of MgO is from 6.0% to 8.5%. In the case of less than 6.0%, the above-described effects due to the addition of MgO are not sufficiently exhibited. However, in the case of exceeding 8.5%, there is a concern that the devitrification temperature is increased. It is preferably 8.0% or less, more preferably 7.5% or less, and still more preferably 7.0% or less.

Meanwhile, in the second embodiment of the alkali-free glass of the present invention, the content of MgO is from 3.0% to less than 6.0%. In the case of less than 3.0%, the above-described effects due to the addition of MgO are not sufficiently exhibited. It is more preferably 3.8% or more and still more preferably 4.2% or more. However, in the case of 6.0% or more, there is a concern that the devitrification temperature is increased. It is more preferably 5.8% or less.

CaO has characteristics that it does not increase the expansion, next to MgO, among alkali earths, and does not extremely decrease the strain point, and further improves the meltability.

Here, in the first embodiment of the alkali-free glass of the present invention, the content of CaO is from 3.0% to 8.5%. In the case of less than 3.0%, the above-described effects due to the addition of CaO are not sufficiently exhibited. It is preferably 3.5% or more and more preferably 4.0% or more. However, In the case of exceeding 8.5%, there is a concern that the devitrification temperature is increased or phosphorus that is an impurity in calcium carbonate (CaCO₃) as a raw material of CaO is largely mixed in. It is preferably 8.0% or less, more preferably 7.5% or less, and still more preferably 7.0% or less.

Meanwhile, in the second embodiment of the alkali-free glass of the present invention, the content of CaO is from 3.0% to 10%. In the case of less than 3.0%, the above-described effects due to the addition of CaO are not sufficiently exhibited. It is preferably 4.0% or more and more preferably 4.5% or more. However, in the case of exceeding 10%, there is a concern that the devitrification temperature is increased or phosphorus that is an impurity in calcium carbonate (CaCO₃) as a raw material of CaO is largely mixed in. It is preferably 9.0% or less, more preferably 8.0% or less, still more preferably 7.5% or less, and still more preferably 7.0% or less.

SrO improves the meltability without increasing the devitrification temperature of the glass. However, in the case of less than 0.5%, the effects are not sufficiently exhibited. It is preferably 1.0% or more, more preferably 1.5% or more, and still more preferably 2.0% or more. However, in the case of exceeding 7.5%, there is a concern that the expansion coefficient is increased. It is preferably 7.3% or less and more preferably 7.0% or less.

BaO is not indispensable, but can be contained for improving the meltability. However, too much causes excessive increases in the expansion and density of the glass, accordingly, the content thereof is set to be 2.5% or less. It is preferably less than 1%, more preferably 0.5% or less, and still more preferably substantially not contained.

ZrO₂ may be contained up to 4.0% in order to decrease the melting temperature of the glass or to accelerate the crystal deposition at the time of firing. In the case of exceeding 4.0%, the glass becomes unstable or a relative dielectric constant ε of the glass becomes increased. It is preferably 2.0% or less, more preferably 1.5% or less, 1.0% or less, or 0.5% or less, and still more preferably substantially not contained.

In the first embodiment of the alkali-free glass of the present invention, in the case where a total of the values obtained by dividing the values displayed on a % by mass basis of MgO, CaO, SrO, and BaO by the respective molecular weight thereof, that is, (MgO/40.3)+(CaO/56.1)+(SrO/103.6)+(BaO/153.3) is less than 0.27, the meltability becomes poor; whereas in the case of exceeding 0.35, there is a concern that the thermal expansion coefficient cannot be suppressed to be low. It is preferably 0.28 or more and more preferably 0.29 or more.

In the second embodiment of the alkali-free glass of the present invention, in the case where (MgO/40.3)+(CaO/56.1)+(SrO/103.6)+(BaO/153.3) is less than 0.27, the meltability becomes poor; whereas in the case of exceeding 0.35, there is a concern that the thermal expansion coefficient cannot be suppressed to be low. It is preferably 0.28 or more and more preferably 0.29 or more.

Since the physical properties such as meltability or devitrification temperature are changed depending on the atomic ratio of the alkaline earth metals, it is effective to prescribe by using values obtained by dividing the values displayed on a % by mass basis of MgO, CaO, SrO, and BaO by the respective molecular weight thereof.

In the first embodiment of the alkali-free glass of the present invention, when the total of the values obtained by dividing the respective values displayed on a % by mass basis of MgO, CaO, SrO, and BaO by the molecular weight thereof, that is, (MgO/40.3)+(CaO/56.1)+(SrO/103.6)+(BaO/153.3) satisfies the above and the following three conditions are also satisfied, the strain point can be increased without increasing the devitrification temperature, and the viscous properties of the glass, particularly the temperature T₄ at which the glass viscosity reaches 10⁴ dPa·s can be decreased.
(MgO/40.3)/((MgO/40.3)+(CaO/56.1)+(SrO/103.6)+(BaO/153.3)) is 0.40 or more, preferably 0.42 or more, and still more preferably 0.45 or more.
(MgO/40.3)/((MgO/40.3)+(CaO/56.1)) is 0.40 or more, preferably 0.42 or more, still more preferably 0.45 or more, and still more preferably 0.50 or more.
(MgO/40.3)/((MgO/40.3)+(SrO/103.6)) is 0.60 or more, preferably 0.62 or more, and more preferably 0.65 or more.

In the second embodiment of the alkali-free glass of the present invention, when the total of the values obtained by dividing the respective values displayed on a % by mass basis of MgO, CaO, SrO, and BaO by the molecular weight thereof, that is, (MgO/40.3)+(CaO/56.1)+(SrO/103.6)+(BaO/153.3) satisfies the above and the following three conditions are also satisfied, the strain point can be increased without increasing the devitrification temperature, and the viscous properties of the glass, particularly the temperature T₄ at which the glass viscosity reaches 10⁴ dPa·s can be decreased.
(MgO/40.3)/((MgO/40.3)+(CaO/56.1)+(SrO/103.6)+(BaO/153.3)) is 0.25 or more, preferably 0.40 or more, still more preferably 0.42 or more, and particularly preferably 0.45 or more.
(MgO/40.3)/((MgO/40.3)+(CaO/56.1)) is 0.30 or more, preferably 0.40 or more, still more preferably 0.42 or more, still more preferably 0.45 or more, and particularly preferably 0.50 or more.
(MgO/40.3)/((MgO/40.3)+(SrO/103.6)) is 0.60 or more, preferably 0.62 or more, and more preferably 0.65 or more.

In the second embodiment of the alkali-free glass of the present invention, when (Al₂O₃×100/102)×(MgO/40.3)/((MgO/40.3)+ (CaO/56.1)+(SrO/103.6)+(BaO/153.3)) is 8.2 or more, the Young's modulus can be increased. This is therefore preferred. It is preferably 8.5 or more, and more preferably 9.0 or more.

When Cl, F, SnO₂ and β-OH value (of the glass) are adjusted as shown below, the alkali-free glass of the present invention has an excellent clarifying action at the time of producing the glass, and is suitable for the production of a substrate glass for a display or a substrate glass for a photomask having no defects on surfaces and in the inside thereof.

Further, at the time of melting the glass raw materials, silica sand as a raw material of SiO₂ is melted at a lower temperature, and unmelted silica sand does not remain unmelted in the glass melt. When unmelted silica sand remains unmelted in the glass melt, unmelted silica sand comes into a state of entrapped in bubbles generated in the glass melt, so that the clarifying action at the time of melting is reduced.

Furthermore, unmelted silica sand entrapped in the bubbles gathers together near the surface layer of the glass melt, thereby resulting in a difference in composition ratio of SiO₂ between the surface layer of the glass melt and a portion other than the surface layer to decrease homogeneity of the glass and also to decrease flatness.

In the alkali-free glass of the present invention, these problems are solved.

The alkali-free glass of the present invention contains Cl in an amount of from 0 to 0.35% by mass.

Incidentally, the Cl content is not the loaded amount in the glass raw materials, but the amount remaining in the glass melt. With respect to this point, the same applies to the F content and SnO₂ content described later.

The Cl content is preferably 0.001% by mass or more or 0.005% by mass or more, and more preferably 0.01 % by mass or more. In the case where the Cl content exceeds 0.35% by mass, platinum interface bubbles increases at the time of producing the glass if SnO₂ coexists. It is preferably 0.25% by mass or less, and more preferably 0.20% by mass or less.

The alkali-free glass of the present invention contains F in an amount of from 0.01 to 0.15% by mass.

In the case where the F content is less than 0.01% by mass, the clarifying action at the time of melting the glass raw materials is reduced. Further, at the time of melting the glass raw materials, the temperature at which silica sand as the raw material of SiO₂ is melted is increased, and there is a concern that unmelted silica sand remains unmelted in the glass melt. It is preferably 0.02% by mass or more, and more preferably 0.03% by mass or more.

In the case where the F content exceeds 0.15% by mass, the strain point of the glass produced is decreased. It is preferably 0.12% by mass or less, and more preferably 0.10% by mass or less.

The alkali-free glass of the present invention contains a tin compound in an amount of from 0.01 to 0.3% by mass in terms of SnO₂. In the present specification, the term "SnO₂ content" means a content of the tin compound in terms of SnO₂.

A tin compound typified by SnO₂ generates O₂ gas in the glass melt.

In the glass melt, SnO₂ is reduced at a temperature of 1,450°C or higher to SnO to generate O₂ gas, and results in an action of making bubbles grow bigger. In the method for producing the alkali-free glass of the present invention, the glass raw materials are heated at from 1,500 to 1,800°C to be melted as described below. Therefore, bubbles in the glass melt can grow bigger more effectively. The tin compound in the glass raw materials is adjusted to be contained in an amount of 0.01% by mass or more in terms of SnO₂ with respect to the total 100% of the mother composition. In the case where the SnO₂ content is less than 0.01% by mass, the clarifying action at the time of melding the glass raw materials is reduced. It is preferably 0.05% by mass or more and more preferably 0.10% by mass or more. In the case where the SnO₂ content exceeds 0.3% by mass, there is a concern that coloration of the glass or devitrification occurs. The content of the tin compound in the alkali-free glass is preferably, in terms of SnO₂, 0.25% by mass or less or 0.2% by mass or less and more preferably 0.18% by mass or less with respect to the total 100% of the mother composition.

When the ratio of the valence of Sn (Sn-redox) is measured by, for example, a wet analysis by a common oxidation-reduction titration, in the case where the value of the ratio represented by Sn²⁺/(Sn⁴⁺+Sn²⁺) in the alkali-free glass is 0.1 or more, SnO₂ generates O₂. Therefore it is preferred to adjust to achieve the value. The value of the ratio is more preferably 0.2 or more and particularly preferably 0.25 or more. In the case where the value of the ratio is less than 0.1, generation of bubbles due to the tin compound becomes insufficient. In order to make the value of the ratio to 0.1 or more, it is preferably make the molten glass of 1,500 to 1,600°C.

A β-OH value of the glass is used as an index of the moisture content in the glass. The alkali-free glass of the present invention has a β-OH value of the glass of from 0.15 to 0.60 mm⁻¹.

In the case where the β-OH value (of the glass) is less than 0.15 mm⁻¹, the clarifying action at the time of melting of the glass raw materials is reduced. Further, at the time of melting of the glass raw materials, the temperature at which silica sand as a raw material of SiO₂ is melted is increased, and there is a concern that unmelted silica sand remains unmelted in the glass melt. It is preferably 0.20 mm⁻¹ or more.

In the case where the β-OH value (of the glass) exceeds 0.60 mm⁻¹, generation of platinum interface bubbles cannot be suppressed. The platinum interface bubbles are generated by the reaction of H₂ passed through a wall surface made of a platinum material, which is a channel of the glass melt, with the moisture in the glass melt to generate O₂. When tin oxide is present in the glass melt, the platinum interface bubbles can be defoamed by being absorbed through an oxidation reaction of SnO to SnO₂. However, in the case where the β-OH value of the glass exceeds 0.60 mm⁻¹, since the moisture content in the glass is high, generation of O₂ through a reaction between H₂ passed through the wall surface made of a platinum material, which is the channel of the glass melt, with the moisture in the glass melt cannot be suppressed. It is preferably 0.55 mm⁻¹ or less and more preferably 0.50 mm⁻¹ or less.

The β-OH value of the glass can be adjusted by various conditions at the time of melting the glass raw materials, for example, the moisture content in the glass raw materials, the water vapor concentration in a melting tank, the retention time of the glass melt in the melting tank and the like.

As a method for adjusting the moisture content in the glass raw materials, there is a method of using hydroxides instead of oxides as the glass raw materials (e.g., magnesium hydroxide (Mg(OH)₂) is used instead of magnesium oxide (MgO) as a magnesium source).

In addition, as a method for adjusting the water vapor concentration in the melting tank, there is a method of using oxygen or a method of using mixed gas of oxygen and the air, instead of using the air for burning of a fuel such as city gas or heavy oil for a purpose of heating the melting tank.

The glass of the present invention does not contain alkali metal oxides in an amount exceeding impurity level (that is, substantially) in order not to deteriorate the properties of a metal or an oxide thin film provided on the glass surface at the time of producing a panel. In addition, for the same reason, it is preferable that P₂O₅ be not substantially contained. Further, it is preferable that PbO, As₂O₃, and Sb₂O₃ be not substantially contained in order to facilitate recycle of the glass.

Further, it is preferable that the alkali-free glass of the present invention not substantially contain SO₃.

In addition to the above-mentioned components, the alkali-free glass of the present invention can contain ZnO and Fe₂O₃ in a total content of 5% or less in order to improve the meltability and formability (float formability) of the glass. In the clarification of the present invention, Fe₂O₃ has a function of increasing the temperature of the molten glass in the melting tank at the time of producing the glass and decreasing the base temperature of the melting tank due to an effect of absorbing infrared rays by Fe²⁺ ions. Accordingly, the content of Fe in the glass is 0.005% or more in terms of Fe₂O₃, preferably 0.007% or more, and more preferably 0.008% or more. In the case of exceeding 0.15%, problems such as coloration of the glass and a decrease in ultraviolet transmittance may be generated. It is preferably 0.1% or less and more preferably 0.08% or less.

The alkali-free glass of the present invention has a strain point of 710°C or higher, preferably 715°C or higher, and more preferably 720°C or higher so that the thermal shrinkage at the time of producing a panel can be suppressed. Further, a solid-phase crystallization method can be applied as a method for producing p-Si TFT.

In the glass of the present invention, the strain point is still more preferably 730°C or higher. When the strain point is 730°C or higher, it is suitable for a high strain point use (e.g., a substrate for a display or a substrate for illumination for an organic EL, having a plate thickness of 0.7 mm or less, preferably 0.5 mm or less, and more preferably 0.3 mm or less, or a substrate for a display or a substrate for illumination, having a plate thickness of 0.3 mm or less and preferably 0.1 mm or less).

In forming a plate glass having a plate thickness of 0.7 mm or less, preferably 0.5 mm or less, more preferably 0.3 mm or less, and still more preferably 0.1 mm or less, since the drawing rate at the time of forming tends to become fast, the fictive temperature of the glass is easily increased and the compaction of the glass easily becomes larger. In this case, when the glass is a glass with a high strain point, the compaction can be suppressed.

Moreover, for the same reason as the case of the strain point, the alkali-free glass of the present invention has a glass transition point of preferably 760°C or higher, more preferably 770°C or higher, and still more preferably 780°C or higher.

In addition, since the alkali-free glass of the present invention has an average thermal expansion coefficient at from 50 to 350°C of from 30×10⁻⁷ to 43×10⁻⁷/°C, it has a high thermal impact resistance and can increase the productivity at the time of producing a panel. In the alkali-free glass of the present invention, the average thermal expansion coefficient at from 50 to 350°C is preferably 35×10⁻⁷/°C or higher. The average thermal expansion coefficient at from 50 to 350°C is preferably 42×10⁻⁷/°C or lower, more preferably 41×10⁻⁷/°C or lower, and still more preferably 40×10⁻⁷/°C or lower.

Moreover, the alkali-free glass of the present invention has a specific gravity of preferably 2.65 or less, more preferably 2.64 or less, and still more preferably 2.62 or less.

Further, the alkali-free glass of the present invention has a temperature T₂ at which a viscosity η reaches 10² poise (dPa·s) is 1,710°C or lower, more preferably lower than 1,710°C, still more preferably 1,700°C or lower, and particularly preferably 1,690°C or lower, and thus, the melting can be relatively easily carried out.

Further, the alkali-free glass of the present invention has a temperature T₄ at which the viscosity η reaches 10⁴ poise is 1,320°C or lower, preferably 1,315°C or lower, more preferably 1,310°C or lower, and still more preferably lower than 1,305°C, which is suitable for float forming.

In addition, it is preferable that the alkali-free glass of the present invention has a devitrification temperature of 1,350°C or lower, because a float forming can be easily carried out. It is preferably 1,340°C or lower and more preferably 1330°C or lower.

The devitrification temperature in the present specification is an average value between the maximum temperature at which crystals are deposited on the surface and the inside of the glass and the minimum temperature at which crystals are not deposited, which are measured by putting pulverized glass particles in a platinum plate, performing a heat treatment for 17 hours in an electric furnace whose temperature is controlled to be constant, and performing observation with an optical microscope after the heat treatment.

Further, the alkali-free glass of the present invention has a Young's modulus of preferably 84 GPa or more, more preferably 86 GPa or more, still more preferably 88 GPa or more, and still more preferably 90 GPa or more.

Moreover, it is preferred that the alkali-free glass of the present invention has a photoelastic constant of 31 nm/MPa/cm or less.

When the glass substrate has birefringence due to stress generated in a production step of a liquid crystal display panel or at the time of use of a liquid crystal display apparatus, a phenomenon that display of black turns to gray to decrease a contrast of the liquid crystal display is sometimes observed. This phenomenon can be suppressed by adjusting the photoelastic constant to 31 nm/MPa/cm or less. It is preferably 30 nm/MPa/cm or less, more preferably 29 nm/MPa/cm or less, still more preferably 28.5 nm/MPa/cm or less, and particularly preferably 28 nm/MPa/cm or less.

Further, it is preferred that the alkali-free glass of the present invention has a photoelastic constant of 23 nm/MPa/cm or more, and more preferably 25 nm/MPa/cm or more, considering easiness of securing other physical properties. Incidentally, the photoelastic constant can be measured by a disk compression method at a measuring wavelength of 546 nm.

Further, it is preferred that the alkali-free glass of the present invention has a dielectric constant of 5.6 or more.

In the case of an In-Cell type touch panel (a touch sensor is incorporated in a liquid crystal display panel) as described in JP-A-2011-70092, it is better that the glass substrate has a higher dielectric constant from the standpoints of improvement in sensing sensitivity of the touch sensor, a decrease in drive voltage and electric power saving. When the dielectric constant is 5.6 or more, the sensing sensitivity of the touch sensor is improved. It is preferably 5.8 or more, more preferably 6.0 or more, still more preferably 6.2 or more, and particularly preferably 6.4 or more.

The dielectric constant can be measured according to the method described in JIS C-2141.

The alkali-free glass of the present invention can be produced, for example, by the following method. Raw materials of respective components which are generally used are blended to make target components, continuously put into a melting furnace and heated at from 1,500°C to 1,800°C to be melted. The glass melt is formed to have a predetermined plate thickness by a float method and plate glass can be obtained by annealing and then cutting the glass.

Here, a reduced-pressure defoaming method is performed as needed with respect to the glass melt before forming by the float method.

It is preferable that the alkali-free glass of the present invention uses the following as the raw materials of each component due to relatively low meltability.

### (Silicon source (SiO₂ raw material))

Silica sand can be used as a raw material of SiO₂. When silica sand having a median particle size D₅₀ of 20 µm to 27 µm, a ratio of particles having a particle size of 2 µm or less of 0.3% by volume or less and a ratio of particles having a particle size of 100 µm or more of 2.5% by volume or less is used, silica sand can be melted while suppressing aggregation thereof, so that the silica sand is easily melted and an alkali-free glass with less foam, and high uniformity and flatness can be obtained. This is therefore preferred.

Further, the term "particle size" in the present specification means a sphere equivalent diameter (means a primary particle size in the present invention) of silica sand, and specifically means a particle size in particle size distribution of powder measured by a laser diffraction/scattering method.

In addition, the term "median particle size D₅₀" in the present specification means a particle size where volume frequency of particles having a particle size of larger than a certain particle size occupies 50% of the whole powder in the particle size distribution of the powder measured by a laser diffraction method. In other words, in the particle size distribution of the powder measured by a laser diffraction method, the term means a particle size at the time when a cumulative frequency is 50%.

Further, "the ratio of particles having a particle size of 2 µm or less" and "the ratio of particles having a particle size of 100 µm or more" in the present specification are measured, for example, through measurement of particle size distribution by using a laser diffraction/scattering method.

In the case where the median particle size D₅₀ of the silica sand is 25 µm or less, silica sand becomes easily melted, which is more preferable.

Further, the ratio of particles having a particle size of 100 µm or more in silica sand is particularly preferably 0%, since silica sand becomes more easily melted.

### (Alkaline earth metal source)

As the alkaline earth metal source, an alkaline earth metal compound can be used. Specific examples of the alkaline earth metal compound include carbonates such as MgCO₃, CaCO₃, BaCO₃, SrCO₃, and (Mg,Ca)CO₃ (dolomite), oxides such as MgO, CaO, BaO, and SrO, and hydroxides such as Mg(OH)₂, Ca(OH)₂, Ba(OH)₂, and Sr(OH)₂. From a viewpoint of a decrease in unmelted silica sand at the time of melting the glass raw materials, it is preferable that a part or all of the alkaline earth metal source contain hydroxide of the alkaline earth metal.

It is more preferable that the content of the hydroxide of the alkaline earth metal be preferably from 5 to 100% by mass (in terms of MO, in this case, M represents an alkaline earth metal element), more preferably from 30 to 100% by mass (in terms of MO), and still more preferably from 60 to 100% by mass (in terms of MO) with respect to 100% by mass of the alkaline earth metal source (in terms of MO) from a viewpoint of the decrease in unmelted silica sand at the time of melting the glass raw materials.

Since the unmelted silica sand at the time of melting is decreased in accordance with the increase in mass ratio of the hydroxide in the alkaline earth metal source, the mass ratio of the hydroxide is better to be higher.

As the alkaline earth metal source, specifically, a mixture of hydroxide and carbonate of an alkaline earth metal, hydroxide alone of the alkaline earth metal, or the like can be used. As the carbonate, at least one of MgCO₃, CaCO₃, and (Mg,Ca)(CO₃)₂ (dolomite) is preferably used. In addition, as the hydroxide of the alkaline earth metal, it is preferable that at least one of Mg(OH)₂ and Ca(OH)₂ be used and particularly preferable that Mg(OH)₂ be used.

### (Boron source (raw material of B₂O₃))

When the alkali-free glass contains B₂O₃, a boron compound can be used as a raw material of B₂O₃. Here, specific examples of the boron compound include orthoboric acid (H₃BO₃), metaboric acid (HBO₂), tetraboric acid (H₂B₄O₇), and anhydrous boric acid (B₂O₃). In a normal alkali-free glass production, orthoboric acid is used in terms of inexpensiveness and availability.

In the present invention, as a raw material of B₂O₃, it is preferable that one containing anhydrous boric acid in a content of 10 to 100% by mass (in terms of B₂O₃) with respect to 100% by mass of a boron source (in terms of B₂O₃) be used. When the anhydrous boric acid is contained in a content of 10% by mass or more, aggregation of the glass raw materials can be suppressed, and an effect of reducing bubbles and improving uniformity and flatness can be obtained. The content of the anhydrous boric acid is more preferably from 20 to 100% by mass and still more preferably from 40 to 100% by mass.

As a boron compound other than the anhydrous boric acid, orthoboric acid is preferable in terms of inexpensiveness and availability.

### (Chlorine source (raw material of Cl))

A chloride is preferably a chloride of at least one cation of various oxides as the glass raw material components of the present invention, that is, preferably a chloride of at least one element selected from Al, Mg, Ca, Sr, and Ba, more preferably a chloride of the alkaline earth metal, and particularly preferably SrCl₂·6H₂O, and BaCl₂·2H₂O in terms of significant action of increasing bubbles and less deliquescency.

### (Fluorine source (raw materials of F))

A fluoride is preferably a fluoride of at least one cation of various oxides as the glass raw material components of the present invention, that is, preferably a fluoride of at least one element selected from Al, Mg, Ca, Sr, and Ba, more preferably a fluoride of the alkaline earth metal, and still more preferably CaF₂ in terms of significant action of increasing meltability of the glass raw materials.

### (Tin source (raw material of Sn))

A tin compound is an oxide, sulfate, a chloride, or a fluoride of Sn. SnO₂ is particularly preferable in terms of making bubbles significantly big. When the particle size of SnO₂ is extremely large, particles of SnO₂ are not completely melted in the glass raw materials and may remain unmelted. Therefore, the average particle size (D₅₀) of SnO₂ is set to 200 µm or less, preferably 150 µm or less, and more preferably 100 µm or less. Further, when the particle size of SnO₂ is extremely small, the particles are aggregated in the glass melt and may remain unmelted. Therefore, it is preferably 5 µm or more and more preferably 10 µm or more.

### EXAMPLES

### (Examples 1 to 6 and Comparative Examples 1 and 2)

Raw materials of respective components were blended to make target compositions listed in Table 1, and melted in a platinum crucible at a temperature T₂ (temperature at which the viscosity reaches log η = 2.0 [dPa·s]) for 4 hours.

Glass compositions (unit: % by mass) and β-OH values (measured by the following procedures as an index of the moisture content in the glass, unit: mm⁻¹) of the glass are listed in Table 1. As the particle size of silica sand in raw materials used at this time, the median particle size D₅₀, the ratio of particles having a particle size of 2 µm or less, and the ratio of particles having a particle size of 100 µm or more are also listed in Table 1. Moreover, the mass ratio (in terms of MO) of the hydroxide raw material in the alkaline earth metal is also listed in Table 1.

### [Method of measuring β-OH value]

Absorbance with respect to light having a wavelength of 2.75 to 2.95 µm is measured by using a glass sample, and the β-OH value in the glass is acquired by dividing the maximum value βₘₐₓ by the thickness (mm) of the respective sample.

Twenty grams of glass of Examples 1 to 6 and Comparative Examples 1 and 2 was cut out and subjected to a heat treatment by using a platinum plate at a temperature of T_{3.5} (temperature at which the viscosity reaches log η = 3.5 [dPa·s]) for 1 minute to achieve a state with no foam on the interface between the glass and the platinum plate. The platinum plate was taken out from the electric furnace and cooled, and the mass and the specific gravity of the platinum plate with the glass still attached thereto were measured, and then the volume thereof was acquired.

Next, a platinum crucible was put in the electric furnace again, heated at the temperature T_{3.5} for 1 hour. The platinum crucible was then taken out from the electric furnace at a stage in which foam was generated on the platinum interface, and cooled. Next, the mass and the specific gravity thereof were measured again and the volume thereof was acquired. The volume difference before and after the heat treatment at the temperature T_{3.5} for 1 hour was taken as a platinum interface foam volume.

**[Table 1]**

| % by mass | Ex. 1 | Ex.2 | Ex.3 | Ex.4 |
|---|---|---|---|---|
| SiO₂ | 61.4 | 64.0 | 62.2 | 61.4 |
| Al₂O₃ | 20.9 | 20.5 | 21.7 | 20.5 |
| B₂O₃ | 0 | 1.2 | 0 | 1.0 |
| MgO | 6.0 | 7.2 | 4.7 | 5.7 |
| CaO | 4.5 | 3.7 | 7.3 | 4.4 |
| SrO | 6.9 | 3.2 | 3.9 | 6.8 |
| BaO | 0 | 0 | 0 | 0 |
| ZrO₂ | 0 | 0 | 0 | 0 |
| (MgO/40.3)+(CaO/56.1)+(SrO/103.6)+(BaO/153.3) | 0.30 | 0.28 | 0.28 | 0.29 |
| (MgO/40.3)/((MgO/40.3)+(CaO/56.1)+(SrO/103.6)+ (BaO/153.3)) | 0.50 | 0.65 | 0.41 | 0.50 |
| (MgO/40.3)/((MgO/40.3)+(CaO/56.1)) | 0.65 | 0.73 | 0.47 | 0.64 |
| (MgO/40.3)/((MgO/40.3)+(SrO/103.6)) | 0.69 | 0.85 | 0.76 | 0.68 |
| (Al₂O₃×100/102)×(MgO/40.3)/((MgO/40.3)+ (CaO/56.1)+(SrO/103.6)+(BaO/153.3)) | 10.3 | 13.0 | 8.7 | 10.0 |
| F | 0.07 | 0.07 | 0.07 | 0.07 |
| Cl | 0.01 | 0.01 | 0.01 | 0.01 |
| SnO₂ | 0.18 | 0.18 | 0.18 | 0.18 |
| β-OH value [mm⁻¹] | 0.26 | 0.27 | 0.26 | 0.23 |
| Average thermal expansion coefficient [×10⁻⁷/°C] | 39.2 | (36.8) | (38.9) | (40.2) |
| Strain point [°C] | 725 | (731) | (742) | (735) |
| Glass transition point [°C] | 780 | (784) | (795) | (775) |
| Specific gravity | 2.59 | (2.52) | (2.57) | (2.58) |
| Young's modulus [GPa] | 88 | (86) | (89) | (86) |
| T₂[°C] | 1645 | (1660) | (1656) | (1645) |
| T₄ [°C] | 1300 | (1308) | (1310) | (1297) |
| Devitrification temperature [°C] | 1290 | - | - | - |
| Photoelastic constant [nm/MPa/cm] | 27 | (28) | (27) | (27) |
| D₅₀ [µm] | 26 | 26 | 26 | 26 |
| Ratio of particles having particle size of 2 µm or less [% by volume] | Less than 0.1% | Less than 0.1% | Less than 0.1% | Less than 0.1% |
| Ratio of particles having particle size of 100 µm or less [% by volume] | 0.60% | 0.60% | 0.60% | 0.60% |
| Ratio (in terms of MO) of raw material of hydroxide in alkaline earth metal source [% by mass] | 61 | 77 | 75 | 60 |
| Platinum interface foam volume [mm³/g] | 4.4 | 7.8 | 5.3 | 3.4 |

**[Table 2]**

| % by mass | Ex. 5 | Ex. 6 | Comp. Ex. 1 | Comp. Ex. 2 |
|---|---|---|---|---|
| SiO₂ | 61.1 | 61.4 | 61.5 | 61.3 |
| Al₂O₃ | 21.7 | 19.4 | 21.0 | 20.5 |
| B₂O₃ | 1.0 | 1.0 | 0 | 1.0 |
| MgO | 4.8 | 6.1 | 6.0 | 5.7 |
| CaO | 6.7 | 4.3 | 4.5 | 4.5 |
| SrO | 4.2 | 6.8 | 6.8 | 6.8 |
| BaO | 0.5 | 0 | 0 | 0 |
| ZrO₂ | 0 | 1.0 | 0 | 0 |
| (MgO/40.3)+(CaO/56.1)+(SrO/103.6)+(BaO/153.3) | 0.28 | 0.29 | 0.29 | 0.29 |
| (MgO/40.3)/((MgO/40.3)+(CaO/56.1)+(SrO/103.6)+ (BaO/153.3)) | 0.42 | 0.52 | 0.51 | 0.49 |
| (MgO/40.3)/((MgO/40.3)+(CaO/56.1)) | 0.50 | 0.66 | 0.65 | 0.64 |
| (MgO/40.3)/((MgO/40.3)+(SrO/103.6)) | 0.75 | 0.70 | 0.69 | 0.68 |
| (Al₂O₃×10/102)×(MgO/40.3)/((MgO/40.3)+ (CaO/56.1)+(SrO/103.6)+(BaO/153.3)) | 9.0 | 9.8 | 10.4 | 9.9 |
| F | 0.07 | 0.07 | 0 | 0 |
| Cl | 0.01 | 0.01 | 0.01 | 0.02 |
| SnO₂ | 0.18 | 0.18 | 0.18 | 0.18 |
| β-OH value [mm⁻¹] | 0.25 | 0.25 | 0.24 | 0.25 |
| Average thermal expansion coefficient [×10⁻⁷/°C] | (41.7) | (39.0) | 39.2 | (40.2) |
| Strain point [°C] | (735) | (724) | 730 | (738) |
| Glass transition point [°C] | (790) | (778) | 785 | (780) |
| Specific gravity | (2.58) | (2.59) | 2.59 | (2.58) |
| Young's modulus [GPa] | (86) | (87) | 88 | (86) |
| T₂[°C] | (1636) | (1645) | 1647 | (1647) |
| T₄ [°C] | (1275) | (1298) | 1303 | (1298) |
| Devitrification temperature [°C] | - | - | 1290 | - |
| Photoelastic constant [nm/MPa/cm] | (26) | (27) | 27 | (27) |
| D₅₀ [µm] | 26 | 26 | 26 | 26 |
| Ratio of particles having particle size of 2 µm or less [% by volume] | Less than 0.1% | Less than 0.1% | Less than 0.1% | Less than 0.1% |
| Ratio of particles having particle size of 100 µm or less [% by volume] | 0.60% | 0.60% | 0.60% | 0.60% |
| Ratio (in terms of MO) of raw material of hydroxide in alkaline earth metal source [% by mass] | 71 | 60 | 61 | 60 |
| Platinum interface foam volume [mm³/g] | (5.8) | (3.8) | 29.8 | (23.0) |

As is evident from Tables above, it was confirmed that the volume of the platinum interface foam of Examples 1 to 6 in which F was contained in a content of from 0.01 to 0.15% by mass was more decreased compared to Comparative Examples 1 and 2 in which the content of F of the glass did not satisfy the above-described range.

The present invention has been described in detail with reference to specific embodiments thereof, but it will be apparent to one skilled in the art that various modifications and changes can be made without departing the scope and spirit of the present invention.

The present application is based on Japanese Patent Application No. 2012-128204 filed on June 5, 2012, and the contents of which are incorporated herein by reference.

### INDUSTRIAL APPLICABILITY

Since the alkali-free glass of the present invention has a high strain point and can be formed by a float method, it is suitable for the usage of a substrate for a display or a substrate for a photomask. Further, it is also suitable for the usage of a substrate for solar cells.

## Claims

1. An alkali-free glass having a strain point of 710°C or higher, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,320°C or lower, comprising, indicated by % by mass on the basis of oxides:
| | |
|---|---|
| SiO₂ | 58.5 to 67.5, |
| Al₂O₃ | 18 to 24, |
| B₂O₃ | 0 to 1.7, |
| MgO | 6.0 to 8.5, |
| CaO | 3.0 to 8.5, |
| SrO | 0.5 to 7.5, |
| BaO | 0 to 2.5, and |
| ZrO₂ | 0 to 4.0, |
comprising 0 to 0.35% by mass of Cl, 0.01 to 0.15% by mass of F, and 0.01 to 0.3% by mass of SnO₂, and
having a β-OH value of the glass of from 0.15 to 0.60 mm⁻¹,
wherein (MgO/40.3)+(CaO/56.1)+(SrO/103.6)+(BaO/153.3) is from 0.27 to 0.35,
(MgO/40.3)/((MgO/40.3)+(CaO/56.1)+(SrO/103.6)+(BaO/153.3)) is 0.40 or more,
(MgO/40.3)/((MgO/40.3)+(CaO/56.1)) is 0.40 or more, and
(MgO/40.3)/((MgO/40.3)+(SrO/103.6)) is 0.60 or more.

2. An alkali-free glass having a strain point of 710°C or higher, an average thermal expansion coefficient at from 50 to 350°C of from 30×10⁻⁷ to 43×10⁻⁷/°C, a temperature T₂ at which glass viscosity reaches 10² dPa·s of 1,710°C or lower, and a temperature T₄ at which the glass viscosity reaches 10⁴ dPa·s of 1,320°C or lower, comprising, indicated by % by mass on the basis of oxides:
| | |
|---|---|
| SiO₂ | 58 to 66.5, |
| Al₂O₃ | 18 to 24, |
| B₂O₃ | 0 to 1.7, |
| MgO | 3.0 to less than 6.0, |
| CaO | 3.0 to 10, |
| SrO | 0.5 to 7.5, |
| BaO | 0 to 2.5, and |
| ZrO₂ | 0 to 4.0, |
comprising 0 to 0.35% by mass of Cl, 0.01 to 0.15% by mass of F, and 0.01 to 0.3% by mass of SnO₂, and
having a β-OH value of the glass of from 0.15 to 0.60 mm⁻¹,
wherein (MgO/40.3)+(CaO/56.1)+(SrO/103.6)+(BaO/153.3) is from 0.27 to 0.35,
(MgO/40.3)/((MgO/40.3)+(CaO/56.1)+(SrO/103.6)+(BaO/153.3)) is 0.40 or more,
(MgO/40.3)/((MgO/40.3)+(CaO/56.1)) is 0.40 or more,
(MgO/40.3)/((MgO/40.3)+(SrO/103.6)) is 0.60 or more, and
(Al₂O₃×100/102)×(MgO/40.3)/((MgO/40.3)+(CaO/56.1)+(SrO/103.6)+(BaO/153.3)) is 8.2 or more.

3. A method for producing the alkali-free glass described in claim 1 or 2, wherein silica sand having a median particle size D₅₀ of from 20 µm to 27 µm, a ratio of particles having a particle size of 2 µm or less of 0.3% by volume or less and a ratio of particles having a particle size of 100 µm or more of 2.5% by volume or less is used as a silicon source of a SiO₂ raw material.

4. A method for producing the alkali-free glass described in claim 1 or 2, wherein an alkaline earth metal source containing a hydroxide of an alkaline earth metal in an amount of from 5 to 100% by mass (in terms of MO, provided that M is an alkaline earth metal element, the same applies hereinafter), of 100% by mass (in terms of MO) of the alkaline earth metal source is used as the alkaline earth metal source of MgO, CaO, SrO, and BaO.

5. A method for producing the alkali-free glass described in claim 1 or 2, wherein silica sand having a median particle size D₅₀ of from 20 µm to 27 µm, a ratio of particles having a particle size of 2 µm or less of 0.3% by volume or less and a ratio of particles having a particle size of 100 µm or more of 2.5% by volume or less is used as a silicon source of a SiO₂ raw material, and an alkaline earth metal source containing a hydroxide of an alkaline earth metal in an amount of from 5 to 100% by mass (in terms of MO, provided that M is an alkaline earth metal element, the same applies hereinafter), of 100% by mass (in terms of MO) of the alkaline earth metal source is used as the alkaline earth metal source of MgO, CaO, SrO, and BaO.
